# EUROPEAN PATENT APPLICATION

(11) **EP 1 881 720 A1**
(43) Date of publication of application: **23.01.2008**
(21) Application number: 06291173.0
(22) Date of filing: 19.07.2006
(51) Int. Cl.: H04Q 7/38

(54) **Method of controlling handover, base station and mobile station for use in a mobile communication network**

(71) Applicant: Alcatel Lucent, 75008 Paris (FR)
(72) Inventor: Hofmann, Dirk, 74321 Bietigheim-Bissingen (DE)
(74) Representative: Kohler Schmid Möbus

(57) **Abstract**

A method of managing mobility in a communication network (13) wherein a mobile station (9) is handed over from a source base station (1.1) to a target base station (1.2). The proposed method comprises:
- providing the target base station (1.2) with a first measurement report (MR1) on radio link quality, said first measurement report comprising radio link quality measurements by the mobile station (9) prior to said handover;
- providing the target base station (1.2) with a second measurement report (MR2) on radio link quality, said second measurement report comprising radio link quality measurements by the mobile station (9) after said handover;
- in case of a proposed handover of the mobile station (9) back to the source base station (1.1), comparing said first and second measurement reports (MR1, MR2);
- during a predefined time interval, allowing the proposed handover only in case of an overload situation at the target base station (1.2) and/or in case of differences between said first and second measurement reports (MR1, MR2) which are above a predefined threshold.

## Description

### Background of the invention

The present invention relates to a method of managing mobility in a communication network wherein a mobile station is handed over from a source base station to a target base station.

The present invention further relates to a base station and to a mobile station for use in a communication network.

A Radio Access Network (RAN) of, e.g., a Public Land Mobile Network (PLMN) can generally be realised with a centralised or with a decentralised architecture. Using a centralised architecture, a central node (e.g., Radio Network Controller (RNC) in UMTS (Universal Mobile Telecommunications System)) controls all of the base stations or at least a group of base stations in a communication network. The central node provides functions such as radio resource management, transmits power management, handover decisions, etc. for all radio cells in its field of responsibility (e.g. Radio Network Subsystem (RNS) in UMTS) in the communication system.

In a decentralised architecture with no central node, all of said functions of the central node have to be distributed among the base stations of the communication network.

In the latter context, a particular problem concerning handover arises if base stations from different manufacturers are used in the RAN: a source base station currently serving a mobile station or user equipment performs a handover decision primarily based on measurement reports comprising quality-related radio link parameters from said user equipment (UE). However, an algorithm used for deriving said handover decision generally is not standardised due to competition among manufacturers. If the UE switches to a base station (target base station) of another manufacturer, then a different algorithm for a handover decision will generally be employed in that base station. In this way, it may happen that the target base station immediately decides on a handover back to the source base station (so-called backward handover) even if the measurement report on radio link quality, which is the basis for the handover decision, is essentially the same (e.g., UE has not moved).

In this particular case, the UE is swapped between the source base station and the target base station in a "ping-pong" manner. Such a ping-pong effect will produce a large amount of signalling and will influence the services running on the UE in a negative manner, e.g., by increase of packet loss, service delay, and jitter.

In current systems with centralised architecture (e.g. UMTS) similar situations occur, e.g., when the central entity deciding on handover is changed during a handover. Examples for this are UE involved SRNS Relocations or Inter RAT handovers. In the above-mentioned examples the algorithms used often differ from each other because the nodes hosting these algorithms are of different releases, from different technology, or from different vendors. However, in centralised systems interoperability is possible without extensive ping-pong events owing to the fact that the different algorithms have to follow some specifications, operator demands, and a common understanding of the desired behaviour by the different vendors. Furthermore, only a small part of the handover processes actually coincide with a change of the handover decision entity.

Contrary to that, in a decentralised architecture every handover is accompanied with a change of the handover decision entity, thus leading to an increased risk of ping-pong events. Object of the invention

It is the object of the present invention to provide a method of the above-defined type as well as a base station and a mobile station for use in a communication network which avoid ping-pong effects during handover.

### Summary of the invention

According to a first aspect of the present invention the object is achieved by providing a method of the above-defined type, said method comprising:
- providing the target base station with a first measurement report on radio link quality, said first measurement report comprising radio link quality measurements by the mobile station prior to said handover;
- providing the target base station with a second measurement report on radio link quality, said second measurement report comprising radio link quality measurements by the mobile station after said handover;
- in case of a proposed handover of the mobile station back to the source base station, comparing said first and second measurement reports;
- during a predefined time interval, allowing the proposed handover only in case of an overload situation at the target base station and/or in case of differences between said first and second measurement reports which are above a predefined threshold.

According to a second aspect of the present invention, the object is achieved by providing a base station for use in a mobile communication network, comprising:
- means for receiving, in connection with a handover of a mobile station from a further base station in said communication network, a first measurement report on radio link quality by the mobile station from a first entity in said communication network;
- means for receiving a second measurement report on radio link quality by the mobile station from the mobile station;
- means for evaluating at least its own load situation and for providing an evaluation result;
- means for comparing said first and second measurement reports and for providing a comparison result;
- means for commanding a handover back to said further base station in accordance with said evaluation result and with said comparison result during a predefined time interval only if said evaluation result indicates an overload situation and/or if differences between said first and second measurement reports (MR1, MR2) are above a predefined threshold.

According to a third aspect of the present invention the object is achieved by providing a mobile station for use in a mobile communication network, comprising means for measuring a radio link quality to a base station in said network, further comprising:
- means for storing, in connection with a handover, a first measurement report on radio link quality prior to said handover;
- means for providing said first measurement report and a second measurement report on radio link quality after said handover to a currently serving base station.

Thus, in accordance with a basic idea underlying the present invention, the proposed solution is primarily based on informing the target base station about the basis of decision (measurement report) for the performed handover. After handover from source base station to target base station, the latter is not allowed to command a backward handover, if a new measurement report from the UE to the target base station has not changed substantially with respect to the measurement report which formed the basis for the performed handover. In other words, for backward handover differences between said two measurement reports have to be above a predefined threshold (hysteresis). Otherwise, only in case of an overload in the target base station, a backward handover may be allowed.

However, in this case and in a further embodiment of the method in accordance with the present invention, information about said overload situation may be provided to the source base station, so that no second handover from the source base station back to the overloaded target base station will be commanded.

In a corresponding embodiment of the base station in accordance with the present invention, the latter comprises means for providing information with respect to said overload situation to said further base station.

In an embodiment of the method in accordance with the present invention, the latter comprises blocking handover back to the source base station during a predefined time interval in case of said differences being below said predefined threshold, thus further enhancing capability of preventing ping-pong effects.

In an embodiment of the method in accordance with the present invention, the latter comprises sending said first measurement report to the target base station prior to said handover and storing said first measurement report at the target base station for comparing with said second measurement report. Said embodiment therefore requires corresponding storing means at the respective base stations.

In a corresponding embodiment of the base station in accordance with the present invention, the latter comprises means for storing at least said first measurement report.

In another embodiment of the method in accordance with the present invention, the latter comprises storing said first measurement report at the mobile station and sending said first measurement report to the target base station together with said second measurement report. Said embodiment therefore requires corresponding storing means at individual mobile stations.

In a further embodiment of the method in accordance with the present invention, the latter comprises sending said first measurement report from the mobile station to the source base station and forwarding said first measurement report to the target base station together with a load report indicating a current load situation at the source base station.

Further advantages and characteristics of the present invention can be gathered from the following description of preferred embodiments given by way of example only with reference to the enclosed drawings. Features mentioned above as well as below can be used in accordance with the present invention either individually or in conjunction. The described embodiments are not to be regarded as an exhaustive enumeration but rather as examples with respect to a general concept underlying the present invention.

### Brief description of the drawings

- Fig. 1: is a schematic block diagram of a base station in accordance with an embodiment of the present invention for use in a mobile communication network;
- Fig. 2: is a schematic block diagram of a mobile station in accordance with an embodiment of the present invention for use in a mobile communication system;
- Fig. 3: is a schematic signalling diagram for illustrating a first embodiment of the method in accordance with the present invention; and
- Fig. 4: is a schematic signalling diagram for illustrating a second embodiment of the method in accordance with the present invention.

### Detailed description

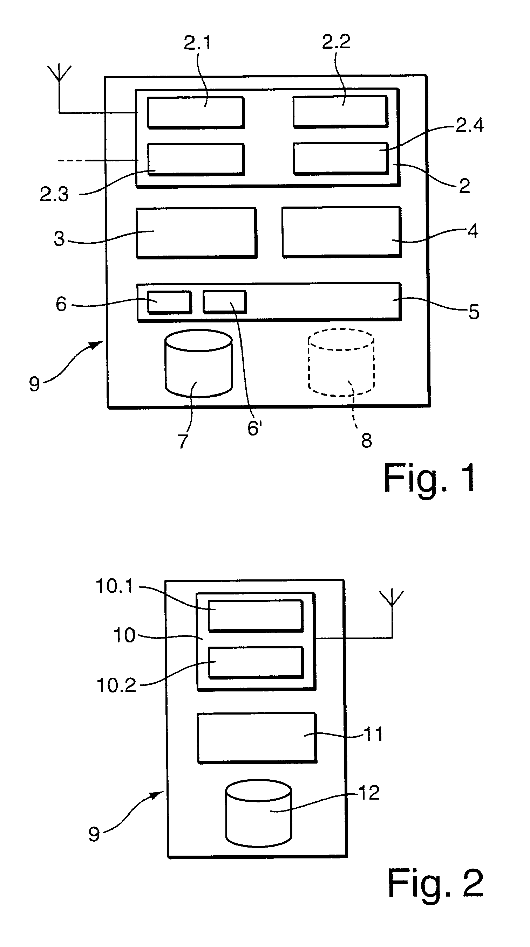

**Fig. 1** shows a schematic block diagram of a base station **1** in accordance with an embodiment of the present invention for use in a mobile communication network.

According to the embodiment of Fig. 1, base station 1 comprises transceiving means **2,** evaluating means **3,** comparing means **4,** handover commanding means **5** including timer means **6** and handover decision algorithm **6',** first storing means **7,** and - optionally - second storing means **8.** Within transceiving means 2, base station 1 further comprises first means **2.1** for receiving information related to a load situation from a further base station (not shown) similar to base station 1 in a communication network, second means **2.2** for providing information to its own load situation to a further base station, third means **2.3** for receiving measurement reports comprising information on radio link quality from further entities (e.g., base stations and/or mobile stations; not shown) in said communication network, and fourth means **2.4** for providing such measurement reports to further base stations in said communication network.

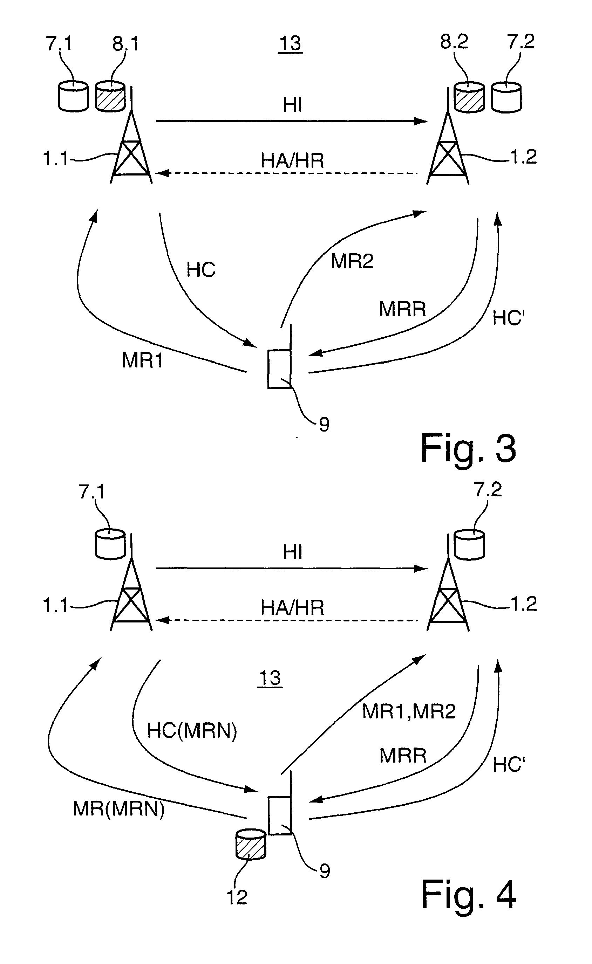

Functioning of the individual means of base station 1 will be described in detail below with reference to appended Figs. 3 and 4. In particular, optional storing means 8 in Fig. 1 is needed for implementing the variant of the method in accordance with the present invention as depicted in Fig. 3. An embodiment of base station 1 without said optional storing means 8 can be used in the embodiment of the method in accordance with the present invention as depicted in Fig. 4.

**Fig. 2** shows a schematic block diagram of a mobile station **9** in accordance with an embodiment of the present invention for use in a mobile communication system. Mobile station 9 (hereinafter also referred to as user equipment, UE) comprises transceiving means **10** including first means **10.1** for providing measurement reports comprising information on radio link quality to at least one base station in a communication network, such as base station 1 of Fig. 1. Transceiving means 10 further comprises second means **10.2** for receiving command/request messages from a base station, as will become apparent later. Besides transceiving means 10 mobile station 9 further comprises means **11** for measuring said radio link quality, i.e., corresponding radio link parameters, as known to a person skilled in the art, and for providing said measurement reports. Furthermore, mobile station 9 comprises optional storing means **12,** which are intended for use in the embodiment of the method in accordance with the present invention as depicted in appended Fig. 4.

Operation of base station 1 (Fig. 1) and mobile station 9 (Fig. 2) will now be explained in detail with reference to embodiments of the method in accordance with the present invention as depicted in appended Figs. 3 and 4.

**Fig. 3** shows a schematic signalling diagram for illustrating a first embodiment of the method in accordance with the present invention. Referring to Fig. 3, there is depicted a mobile communication network **13** comprising user equipment 9 and first and second base stations **1.1, 1.2,** respectively. Hereinafter, the first base station 1.1 will also be referred to as source base station, whereas the second base station 1.2 will also be referred to as target base station. As already stated above with reference to appended Fig. 1, in the embodiment of Fig. 3 said first and second base stations 1.1, 1.2 comprise first and second storing means **7.1, 7.2** and **8.1, 8.2,** respectively. Hereinafter, said first storing means 7.1, 7.2 will also be referred to as load report database, and said second storing means 8.1, 8.2 will also be referred to as measurement report database with reference to their respective contents.

In the following it is assumed that UE 9 is in connected mode, can receive signals from source base station 1.1 and target base station 1.2, and is currently being served by source base station 1.1.

According to the embodiment of Fig. 3, UE 9 transmits (e.g., on demand or periodically) a measurement report with measurement results of the serving link (with source base station 1.1) and potential candidate links (with other base stations) to source base station 1.1. Transmission of said measurement report is denoted by means of arrow **MR1** in Fig. 3. As already stated above, to this end user equipment 9 uses its measuring means 11 in operative connection with said first means 10.1 of transceiver 10 (Fig. 2). Preferably, measurement report MR1 is sent if specific trigger thresholds are reached. Source base station 1.1 receives said measurement report MR1 through said third means 2.3 and then evaluates measurement report MR1, its own current load situation and load information of the target base station, if available, by means of its evaluating means 3 (Fig. 1). In the present example, this evaluation results in a handover decision by algorithm 6' for handover of user equipment 9 to target base station 1.2.

To this end, source base station 1.1 sends a handover indication message indicated by means of arrow **HI** to the target base station 1.2 by means of transceiver 2. Said handover indication message HI comprises information about a decision basis of said handover decision, i.e. measurement report MR1 received from user equipment 9 and current load situation at the source base station provided by said second and fourth means 2.2, 2.4, respectively. The target base station 1.2 receives said information through its transceiving means 2, does a resource reservation for the services of UE 9, updates its knowledge of the load situation at source base station 1.1 in its load report database 7.2, and stores said measurement report MR1 from UE 9 as transmitted with said handover indication message Hl for a predetermined time in its measurement report database 8.2. Steps one (resource reservation) and three (storing MR1) are only performed in case the handover is accepted by the target base station.

If the information about target base station 1.2 in the load report database 7.1 of source base station 1.1 is not sufficiently up-to-date, an answer from the target base station is required, before the source base station will send a handover command HC to UE 9. This answer can be a handover acceptation or a handover rejection message HA/HR depended on the current situation (e.g. overload) at target base station 1.2. If no handover rejection message is received, source base station 1.1 sends a handover command denoted by means of arrow HC to UE 9. Handover command HC comprises information for effecting a handover to target base station 1.2. Mobile station 9 receives said command trough means 10, 10.2, and after corresponding reconfiguration of its lower layers, as known to a person skilled in the art, UE 9 sends a handover confirmation message (arrow HC') to target base station 1.2.

At this point, target base station 1.2 requires information about the current link quality. Therefore, target base station 1.2 sends a measurement report request (arrow **MRR**) to the user equipment 9. Having effected the corresponding measurements by means of measuring means 11 (Fig. 2), the UE 9 sends a measurement report (arrow **MR2**) to the target base station 1.2. Having received said measurement report MR2, target base station 1.2 performs an evaluation of the link quality and the load situation in communication network 13. If the handover decision algorithm 6' implemented on handover commanding means 5 demands handover back to the source base station 1.1, target base station 1.2 consults the previous measurement report MR1 received within said handover indication message HI and stored in measurement report database 8.2. Measurement results from previous measurement report MR1 and the new measurement report MR2 are then compared by means of comparing means 4. If the respective measurement results are the same within a certain predefined hysteresis value, i.e., differences between said measurement reports are below a predefined threshold, then the target base station 1.2 is not allowed to execute a handover back to source base station 1.1 for a predefined time interval. Said time interval is monitored by means of timer 6.

The only exception to this general rule is the case of an overload situation occurring in the target base station 1.2. In this case, a backward handover will be allowed. However, in this case information about the overload situation at target base station 1.2 will be provided to the source base station 1.1 during a further handover procedure (not shown in Fig. 3), as described above, so that no second handover from source base station 1.1 to target base station 1.2 will occur for a certain time.

In this way, the embodiment of the method in accordance with the present invention depicted in above-described Fig. 3 is based on signalling handover-causing measurement reports and load reports between source base station 1.1 and target base station 1.2.

**Fig. 4** shows a schematic signalling diagram for illustrating a second embodiment of the method in accordance with the present invention. As can be gathered from the graphical representation in Fig. 4, the difference to the above-described embodiment of Fig. 3 is the location of measurement report databases. Whereas in Fig. 3 the measurement report database is located in a respective base station 1.1, 1.2, in the embodiment of Fig. 4 a single measurement report database 12 is located in UE 9, i.e., in each user equipment devised in accordance with an embodiment of the present invention (cf. Fig. 2).

In the embodiment of Fig. 4, a handover procedure for user equipment 9 is performed as follows:

UE 9 sends a first measurement report MR1 comprising a unique measurement report number **MRN** to source base station 1.1. UE 9 stores said measurement report MR1 and its number MRN for a certain time in measurement report database 12. If source base station 1.1 arrives at a handover decision, as previously described with reference to appended Fig. 3, the source base station 1.1 sends a handover indication message HI with load information to the target base station 1.2. Target base station 1.2 does a resource reservation for the services of UE 9 and stores load information of source base station 1.1 in load report database 7.2. As previously described with reference to appended Fig. 3, subsequent handover acceptation or handover rejection message HA/HR is an optional feature of the present invention.

If no handover rejection message HR is received by source base station 1.1, it sends handover command HC to UE 9, said handover command HC comprising the measurement report number MRN of a particular measurement report which was the basis for said handover decision. In this way, UE 9 "knows" on which measurement report stored in measurement report database 12 source base station 1.1 has based its handover decision.

After radio link reconfiguration at user equipment 9 followed by sending handover confirmation message HC', and receiving measurement report request **MRR** from target base station 1.2, UE 9 sends a new measurement report MR2 together with the previous measurement report MR1 (i.e., the measurement report which triggered the handover decision) to target base station 1.2. In this context, the sending of the combined measurement report as previously described can be triggered by a corresponding reporting event.

Next, target base station 1.2 performs an evaluation of the current link quality (as indicated by means of measurement report MR2) and a current load situation. If the new measurement report MR2 incites a handover decision for handover back to source base station 1.1, comparing means 4 are again used for comparing the previous measurement report MR1 with the new measurement report MR2, i.e., for comparing respective radio link parameters comprised within said measurement reports. As already stated above with reference to appended Fig. 3, if the results of both measurement reports are within a certain hysteresis value (i.e., respective differences lie beneath a predefined threshold), then the target base station 1.2 is not allowed to decide on a backward handover to source base station 1.1 for some time, as controlled by timer means 6 (Fig. 1).

As already described above with reference to appended Fig. 3, only in case of an overload situation at target base station 1.2, the latter is allowed to decide on said backward handover. In this context, owing to providing source base station 1.1 with information concerning the overload situation at target base station 1.2, no immediate handover back to target base station 1.2 will be possible, thus obviating the risk of ping-pong handover between source base station 1.1 and target base station 1.2, in particular due to different evaluating algorithms 6' implemented on the respective handover commanding means 5 (Fig. 1).

In this way, handover ping-pong effects in a decentralised communication network architecture can be avoided. Note that the proposed method does not require a standardisation effort for handover decision algorithms used within the respective base stations. In this way the present invention supports decentralised architecture in 3GPP LTE (long-term evolution of third-generation partnership project).

However, the following requirement should be formulated for efficient practical implementation of the proposed solution: at least one measurement parameter of the serving link and candidate links comprised within measurement reports should be the same for the following reason: for a user equipment attached to the source base station, the link to said source base station is the serving link, and a link to any target base station is the candidate link. After performing a handover, the former candidate link is now the serving link, and the former serving link is now the candidate link. However, if all measurement parameters of the serving link and the candidate link, respectively, are different, then the target base station has less options to compare the measurement results before and after said handover by means of its comparing means 4 (Fig. 1). This means more precisely, that in this case the base stations can only compare the old and new serving link measurement results (previous serving link between UE 9 and source base station 1.1 and current serving link between UE 9 and target base station 1.2) and the old and new candidate measurement values. If the above-mentioned requirement is fulfilled, then base stations can also compare link parameters such as of its previous serving state values with its current candidate state values (e.g. previous serving link between UE 9 and source base station 1.1 and current candidate link between UE 9 and source base station 1.1), thus enabling a more flexible application of the inventive concept.

## Claims

1. A method of managing mobility in a communication network (13) wherein a mobile station (9) is handed over from a source base station (1.1) to a target base station (1.2), comprising:
- providing the target base station (1.2) with a first measurement report (MR1) on radio link quality, said first measurement report comprising radio link quality measurements by the mobile station (9) prior to said handover;
- providing the target base station (1.2) with a second measurement report (MR2) on radio link quality, said second measurement report comprising radio link quality measurements by the mobile station (9) after said handover;
- in case of a proposed handover of the mobile station (9) back to the source base station (1.1), comparing said first and second measurement reports (MR1, MR2);
- during a predefined time interval, allowing the proposed handover only in case of an overload situation at the target base station (1.2) and/or in case of differences between said first and second measurement reports (MR1, MR2) which are above a predefined threshold.

2. The method of claim 1, further comprising providing information on said overload situation to the source base station (1.1) to prevent handover of the mobile station (9) back to the target base station (1.2).

3. The method of claim 1, comprising blocking handover back to the source base station (1.1) during a predefined time interval in case of said differences being below said predefined threshold.

4. The method of claim 1, comprising sending said first measurement report (MR1) to the target base station (1.2) prior to said handover and storing said first measurement report (MR1) at the target base station (1.2) for comparing with said second measurement report (MR2).

5. The method of claim 1, comprising storing said first measurement report (MR1) at the mobile station (9) and sending said first measurement report (MR1) to the target base station (1.2) together with said second measurement report (MR2).

6. The method of claim 1, comprising sending said first measurement report (MR1) from the mobile station (9) to the source base station (1.1) and forwarding said first measurement report (MR1) to the target base station (1.2) together with a load report indicating a current load situation at the source base station (1.1).

7. A base station (1; 1.1, 1.2) for use in a mobile communication network (13), comprising:
- means (2.3) for receiving, in connection with a handover of a mobile station (9) from a further base station (1; 1.1, 1.2) in said communication network (13), a first measurement report (MR1) on radio link quality by the mobile station (9) from a first entity (1.1; 9) in said communication network (13);
- means (2.3) for receiving a second measurement report (MR2) on radio link quality by the mobile station (9) from the mobile station (9);
- means (3) for evaluating at least its own load situation and for providing an evaluation result;
- means (4) for comparing said first and second measurement reports (MR1, MR2) and for providing a comparison result;
- means (5) for commanding a handover back to said further base station (1.1) in accordance with said evaluation result and with said comparison result during a predefined time interval only if said evaluation result indicates an overload situation and/or if differences between said first and second measurement reports (MR1, MR2) are above a predefined threshold.

8. The base station (1; 1.1, 1.2) of claim 7, further comprising means (2.2) for providing information with respect to said overload situation to said further base station (1; 1.1, 1.2).

9. The base station (1, 1.1, 1.2) of claim 7, comprising means (7; 7.1, 7.2) for storing at least said first measurement report (MR1).

10. A mobile station (9) for use in a mobile communication network (13), comprising means (11) for measuring a radio link quality to a base station (1, 1.1, 1.2) in said network (13), further comprising:
- means (12) for storing, in connection with a handover, a first measurement report (MR1) on radio link quality prior to said handover;
- means (10.1) for providing said first measurement report (MR1) and a second measurement report (MR2) on radio link quality after said handover to a currently serving base station (1.2).
